(19) Europäisches Patentamt / European Patent Office / Office européen des brevets

(11) **EP 4 147 412 B1**

(12) # EUROPEAN PATENT SPECIFICATION

(45) Date of publication and mention
of the grant of the patent:
**28.05.2025 Bulletin 2025/22**

(21) Application number: **21830110.9**

(22) Date of filing: **23.06.2021**

(51) International Patent Classification (IPC):
**H04L 5/00** *(2006.01)*

(52) Cooperative Patent Classification (CPC):
**H04L 5/0094; H04L 5/0051;** H04L 5/0023;
H04L 5/0035; H04L 5/005; H04L 5/0078;
H04W 64/00

(86) International application number:
**PCT/CN2021/101832**

(87) International publication number:
**WO 2021/259326 (30.12.2021 Gazette 2021/52)**

(54) **APPARATUS AND METHOD OF WIRELESS COMMUNICATION**

VORRICHTUNG UND VERFAHREN ZUR DRAHTLOSEN KOMMUNIKATION

APPAREIL ET PROCÉDÉ DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2020 US 202063044247 P**

(43) Date of publication of application:
**15.03.2023 Bulletin 2023/11**

(73) Proprietor: **GUANGDONG OPPO MOBILE
TELECOMMUNICATIONS
CORP., LTD.
Dongguan, Guangdong 523860 (CN)**

(72) Inventor: **GUO, Li
Allen, TX 75013 (US)**

(74) Representative: **Novagraaf Technologies
Bâtiment O2
2, rue Sarah Bernhardt
CS90017
92665 Asnières-sur-Seine Cedex (FR)**

(56) References cited:
CN-A- 110 635 876     US-A1- 2018 220 392
US-A1- 2019 007 923     US-A1- 2020 028 648

- **CATT: "DL Reference Signals for NR Positioning", 3GPP DRAFT; R1-1910318 POS DL REFERENCE SIGNALS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 5 October 2019 (2019-10-05), Mobile Competence Centre ; 650, route des Lucioles ; F-06921 Sophia-Antipolis Cedex ; France , XP051789123**
- **LG ELECTRONICS: "Discussion on necessity and details for physical-layer procedures to support UE/gNB measurements", 3GPP DRAFT; R1-1912275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823340**

- **CATT: "DL Reference Signals for NR Positioning", 3GPP DRAFT; R1-1906305 DL REFERENCE SIGNALS FOR NR POSITIONING_V1.0_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France , XP051727755**

# EP 4 147 412 B1

**Description**

BACKGROUND OF DISCLOSURE

1. Field of the Disclosure

The present disclosure relates to the field of communication systems, and more particularly, to an apparatus and a method of wireless communication, which can provide a good communication performance and/or high reliability.

2. Description of the Related Art

New radio (NR) system introduces a multi-transmission/reception point (TRP) based non-coherent joint transmission. Multiple TRPs are connected through backhaul link for coordination. The backhaul link can be ideal or non-ideal. In the case of ideal backhaul, the TRPs can exchange dynamic physical downlink shared channel (PDSCH) scheduling information with short latency and thus different TRPs can coordinate a PDSCH transmission per PDSCH transmission. While, in non-ideal backhaul case, the information exchange between TRPs has large latency and thus the coordination between TRPs can only be semi-static or static.

In current designs, a downlink (DL) positioning reference signal (PRS) is that only a periodic DL PRS that is semi-statically configured is supported. To support high positioning accuracy and low latency, a system would configure a DL PRS transmission with a short transmission periodicity and a large bandwidth. In a frequency range 2 (FR2) system, the system would configure a large number of DL PRS resources so that all the potential UE requiring a positioning service can be well covered by a transmission of DL PRS. The consequence is large resource overhead is used for the transmission of DL PRS and thus the system throughput is impaired. On the other hand, reducing the resource overhead of DL PRS would impair the positioning performance. To summarize, with the current design of periodic semi-statically configured DL PRS transmission, it is not possible to reach a good balance between the resource overhead and a good positioning performance in real system deployment.

Therefore, there is a need for an apparatus (such as a user equipment (UE) and/or a base station) and a method of wireless communication, which can solve issues in the prior art, reach a good balance between a resource overhead and a good positioning performance in a system deployment, provide a good communication performance, and/or provide high reliability. Related art can also be found in the US Patent Application Publication No. US 2020/028648 A1, in which an on-demand positioning reference signal (RPS) is discussed.

SUMMARY

An object of the present disclosure is to propose an apparatus (such as a user equipment (UE) and/or a base station) and a method of wireless communication, which can solve issues in the prior art, reach a good balance between a resource overhead and a good positioning performance in a system deployment, provide a good communication performance, and/or provide high reliability.

The invention is defined by the independent claims. Advantageous embodiments are set out in the dependent claims.

BRIEF DESCRIPTION OF DRAWINGS

In order to illustrate the embodiments of the present disclosure or related art more clearly, the following figures will be described in the embodiments are briefly introduced. It is obvious that the drawings are merely some embodiments of the present disclosure, a person having ordinary skill in this field can obtain other figures according to these figures without paying the premise.

FIG. 1A is a schematic diagram illustrating that example of multi-transmission/reception point (TRP) transmission according to an embodiment of the present disclosure.
FIG. 1B is a schematic diagram illustrating that example of multi-transmission/reception point (TRP) transmission according to an embodiment of the present disclosure.
FIG. 2 is a block diagram of one or more user equipments (UEs) and a base station (e.g., gNB or eNB) of communication in a communication network system according to an embodiment of the present disclosure.
FIG. 3 is a flowchart illustrating a method of wireless communication by a user equipment (UE) according to an embodiment of the present disclosure.
FIG. 4 is a flowchart illustrating a method of wireless communication by a base station according to an embodiment of the present disclosure.

FIG. 5 is a block diagram of a system for wireless communication according to an embodiment of the present disclosure.

DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

In non-coherent joint transmission, different transmission/reception points (TRPs) use different physical downlink control channels (PDCCHs) to schedule physical downlink sharing channel (PDSCH) transmission independently. Each TRP can send one downlink control information (DCI) to schedule one PDSCH transmission. PDSCHs from different TRPs can be scheduled in the same slot or different slots. Two different PDSCH transmissions from different TRPs can be fully overlapped or partially overlapped in PDSCH resource allocation. To support multi-TRP based non-coherent joint transmission, a user equipment (UE) is requested to receive PDCCH from multiple TRPs and then receive PDSCH sent from multiple TRPs. For each PDSCH transmission, the UE can feedback a hybrid automatic repeat request-acknowledge (HARQ-ACK) information to a network. In multi-TRP transmission, the UE can feedback the HARQ-ACK information for each PDSCH transmission to the TRP transmitting the PDSCH. The UE can also feedback the HARQ-ACK information for a PDSCH transmission sent from any TRP to one particular TRP.

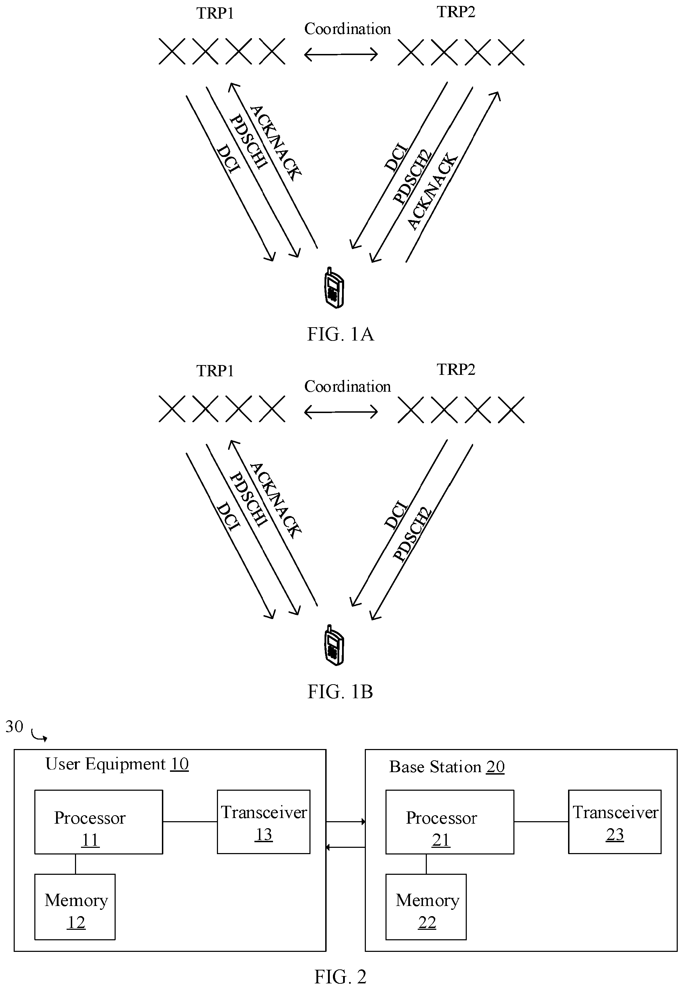

An example of multi-TRP based non-coherent joint transmission is illustrated in FIG. 1A. A UE receives a PDSCH based on non-coherent joint transmission from two TRPs: TRP1 and TRP2. As illustrated in FIG. 1A, the TRP1 sends one DCI to schedule a transmission of PDSCH 1 to the UE and the TRP2 sends one DCI to schedule a transmission of PDSCH 2 to the UE. At the UE side, the UE receives and decodes DCI from both TRPs. Based on the DCI from the TRP1, the UE receives and decodes the PDSCH 1 and based on the DCI from the TRP2, the UE receives and decodes the PDSCH 2. In the example illustrated in FIG. 1A, the UE reports HARQ-ACK for PDSCH 1 and PDSCH2 to the TRP1 and the TRP 2, respectively. The TRP1 and the TRP 2 use different control resource sets (CORESETs) and search spaces to transmit DCI scheduling PDSCH transmission to the UE. Therefore, the network can configure multiple CORESETs and search spaces. Each TRP can be associated with one or more CORESETs and also the related search spaces. With such configuration, the TRP would use the associated CORESET to transmit DCI to schedule a PDSCH transmission to the UE. The UE can be requested to decode DCI in CORESETs associated with TRP to obtain PDSCH scheduling information.

Another example of multi-TRP transmission is illustrated in FIG. 1B. A UE receives PDSCH based on non-coherent joint transmission from two TRPs: TRP1 and TRP2. As illustrated in FIG. 1B, the TRP1 sends one DCI to schedule a transmission of PDSCH 1 to the UE and the TRP2 sends one DCI to schedule the transmission of PDSCH 2 to the UE. At the UE side, the UE receives and decodes DCI from both TRPs. Based on the DCI from the TRP1, the UE receives and decodes the PDSCH 1 and based on the DCI from the TRP2, the UE receives and decodes the PDSCH 2. In the example illustrated in FIG. 1B, the UE reports HARQ-ACK for both PDSCH 1 and PDSCH2 to the TRP, which is different from the HARQ-ACK reporting in the example illustrated in FIG. 1A. The example illustrated in FIG. 1B needs ideal backhaul between the TRP 1 and the TRP 2, while the example illustrated in FIG. 1A can be deployed in the scenarios that the backhaul between the TRP 1 and the TRP 2 is ideal or non-ideal.

In 3GPP NR, a downlink positioning reference signal (PRS) is introduced to support downlink time difference-based positioning technology. The PRS signal is transmitted by TRP and received by the UE. The UE can measure arrival timing, signal RSRP, and signal arrival angles which would be used by a system to estimate a location of UE. The DL PRS is periodically transmitted by a base station such as a gNB. A UE can be configured with one or more DL PRS resource sets and each DL PRS resource set comprises one or multiple DL PRS resources. For each DL PRS resource set, the UE is provided with the following configuration parameters: 1. A DL PRS resource set ID. 2. DL PRS periodicity that defines the DL PRS resource periodicity. All the DL PRS resource within the same DL PRS resource set can be configured with the same periodicity. 3. A DL PRS resource set slot offset that defines the slot offset with respect to SFN slot 0, which is used by the UE to determine the slot location of DL PRS resources within the DL PRS resource set. 4. A DL PRS resource repetition factor that defines how many times each DL PRS resource is repeated for a single instance of the DL PRS resource. All the DL PRS resources within the same DL PRS resource set can have the same resource repetition factor. 5. DL PRS resource time gap that is used to define the slot offset between two repeated instances of the same DL PRS resource. 6. DL PRS resource muting pattern the defines a bitmap of the time location where the DL PRS resource is expected to not be transmitted for a DL PRS resource set.

For a DL PRS resource, the UE is provided with the following configuration parameters: 1. A DL PRS resource ID. 2. A DL PRS RE offset that defines the starting RE offset of the first symbol within a DL PRS resource in frequency. 3. A DL PRS resource slot offset that defines the starting slot of the DL PRS resource with respect to the slot offset of the DL PRS resource set. 4. A DL PRS resource symbol offset that defines the starting symbol of the DL PRS resource within one slot. 5. A number of DL PRS symbols that defines the number of symbols of the DL PRS resource within a slot. 6. QCL configuration information for a PRS resource that defines quasi-colocation information of the DL PRS resource with other reference signals.

For the muting transmission of DL PRS resource, there are two options. The first option is the muting of PRS transmission is per X consecutive instances of one DL PRS resource set. Each bit in the muting bitmap corresponds to X consecutive instances of one DL PRS resource set. And if the value of one bit is zero, then all the DL PRS resources within the PRS resource set in the instance corresponding to the bit are muted. The second option is the muting of PRS transmission is per repetition of each DL PRS resource within each instance of the DL PRS resource set. The UE can be configured with both Options and if both options are configured, the UE can assume the logical AND operation is applied to the two bit maps to determine the muting of DL PRS transmission.

For a configuration of DL PRS resource, four Comb sizes are supported: Comb-2, Comb-4, Comb-6, and Comb-12. The number of symbols configured in one DL PRS resource can be 2, 4, 6, or 12 symbols. The following table lists the combination of Comb size and the number of symbols that can be configured for a DL PRS resource. The relative RE offset for each combination of Comb size and number of symbols for one DL PRS resource is also illustrated in table 1.

Table 1:

|  | 2 symbols | 4 symbols | 6 symbols | 12 symbols |
|---|---|---|---|---|
| Comb-2 | {0, 1} | {0, 1, 0, 1} | {0, 1, 0, 1, 0, 1} | {0, 1, 0, 1, 0, 1, 0, 1, 0, 1} |
| Comb-4 | NA | {0, 2, 1, 3} | NA | {0, 2, 1, 3, 0, 2, 1, 3, 0, 2, 1, 3}} |
| Comb-6 | NA | NA | {0, 3, 1, 4, 2, 5} | {0, 3, 1, 4, 2, 5, 0, 3, 1, 4, 2, 5} |
| Comb-12 | NA | NA | NA | {0, 6, 3, 9, 1, 7, 4, 10, 2, 8, 5, 11} |

PRS support 1-port transmission is provided. For each PRS resource, the UE can assume the sequence r(m) is scaled with a factor $\beta_{\mathrm{PRS}}$ and mapped to resources elements $(k,l)_{p,\mu}$ according to the following:

$$a_{k,l}^{(p,\mu)} = \beta_{\mathrm{PRS}}\, r(m)$$

$$m = 0, 1, \ldots$$

$$k = mK_{\mathrm{comb}}^{\mathrm{PRS}} + \left( \left( k_{\mathrm{offset}}^{\mathrm{PRS}} + k' \right) \bmod K_{\mathrm{comb}}^{\mathrm{PRS}} \right)$$

$$l = l_{\mathrm{start}}^{\mathrm{PRS}}, l_{\mathrm{start}}^{\mathrm{PRS}} + 1, \ldots, l_{\mathrm{start}}^{\mathrm{PRS}} + L_{\mathrm{PRS}} - 1$$

The following conditions are fulfilled: the resource element $(k,l)_{p,\mu}$ is within the resource blocks occupied by the downlink PRS resource for which the UE is configured, the symbol *l* is not used by any SS/PBCH block used by the serving cell for downlink PRS transmitted from the serving cell or indicated by the higher-layer parameter *SSB-positionInBurst* for downlink PRS transmitted from a non-serving cell, the slot number satisfies the conditions configured by muting pattern bitmap(s).

The antenna port p = 5000, $l_{\mathrm{start}}^{\mathrm{PRS}}$ is the first symbol of the downlink PRS within a slot and given by the higher-layer parameter *DL-PRS-ResourceSymbolOffset*; the size of the downlink PRS resource in the time domain $L_{\mathrm{PRS}} \in$ {2,4,6,12} is given by the higher-layer parameter *DL-PRS-NumSymbols*; the comb size $K_{\mathrm{comb}}^{\mathrm{PRS}} \in \{2, 4, 6, 12\}$ is given by the higher-layer parameter *transmissionComb;* the resource-element offset $k_{\mathrm{offset}}^{\mathrm{PRS}} \in \left\{ 0, 1, \ldots, K_{\mathrm{comb}}^{\mathrm{PRS}} - 1 \right\}$ is given by the higher-layer parameter *combOffset*; the quantity *k'* is given by table below, which is the frequency offset value:

| $K_{\mathrm{comb}}^{\mathrm{PRS}}$ | Symbol number within the downlink PRS resource $l - l_{\mathrm{start}}^{\mathrm{PRS}}$ | | | | | | | | | | | |
|---|---|---|---|---|---|---|---|---|---|---|---|---|
|  | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |

**EP 4 147 412 B1**

(continued)

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 1 0 | 1 1 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

FIG. 2 illustrates that, in some embodiments, one or more user equipments (UEs) 10 and a base station (e.g., gNB or eNB) 20 for transmission adjustment in a communication network system 30 according to an embodiment of the present disclosure are provided. The communication network system 30 includes the one or more UEs 10 and the base station 20. The one or more UEs 10 may include a memory 12, a transceiver 13, and a processor 11 coupled to the memory 12 and the transceiver 13. The base station 20 may include a memory 22, a transceiver 23, and a processor 21 coupled to the memory 22 and the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

In some embodiments, the processor 11 is configured, by the base station 20, with a configuration of one or more downlink (DL) positioning reference signal (PRS) resource sets, wherein the configuration of one or more DL PRS resource sets can be transmitted by the base station 20 upon a request of the UE 10, and each DL PRS resource set comprises one or more DL PRS resources and for each DL PRS resource set or each DL PRS resource, the processor 11 is provided with at least one of configuration parameters. This can solve issues in the prior art, reach a good balance between a resource overhead and a good positioning performance in a system deployment, provide a good communication performance, and/or provide high reliability.

In some embodiments, the processor 21 is configured to configure, to the UE 10, a configuration of one or more downlink (DL) positioning reference signal (PRS) resource sets, wherein the configuration of one or more DL PRS resource sets can be transmitted by the base station 20 upon a request of the UE 10, and each DL PRS resource set comprises one or more DL PRS resources and for each DL PRS resource set or each DL PRS resource, the processor 21 is configured to provide, to the UE 10, at least one of configuration parameters. This can solve issues in the prior art, reach a good balance between a resource overhead and a good positioning performance in a system deployment, provide a good communication performance, and/or provide high reliability.

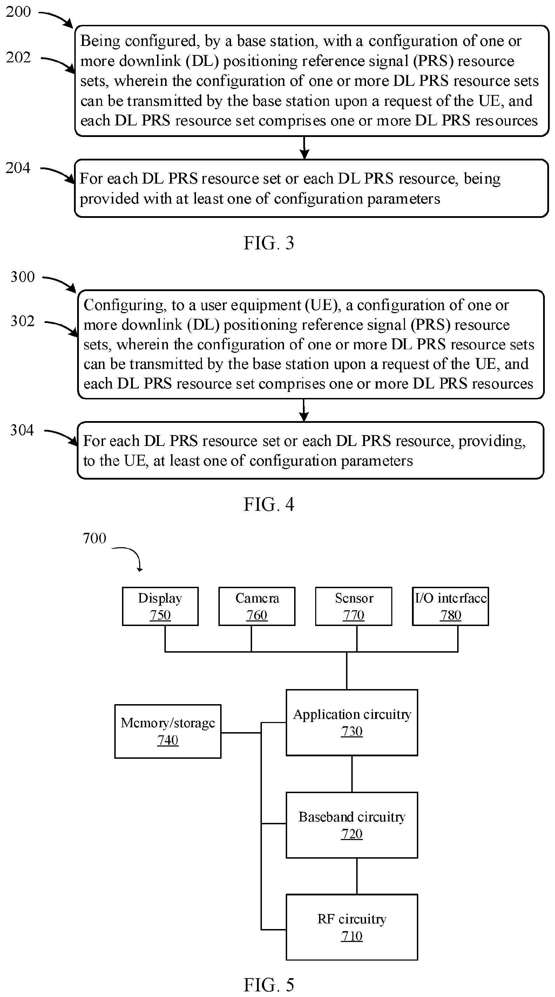

FIG. 3 illustrates a method 200 of wireless communication by a user equipment (UE) 10 according to an embodiment of the present disclosure. In some embodiments, the method 200 includes: a block 202, being configured, by a base station, with a configuration of one or more downlink (DL) positioning reference signal (PRS) resource sets, wherein the configuration of one or more DL PRS resource sets can be transmitted by the base station upon a request of the UE, and each DL PRS resource set comprises one or more DL PRS resources, and a block 204, for each DL PRS resource set or each DL PRS resource, being provided with at least one of configuration parameters. This can solve issues in the prior art, reach a good balance between a resource overhead and a good positioning performance in a system deployment, provide a good communication performance, and/or provide high reliability.

FIG. 4 illustrates a method 300 of wireless communication by a base station 20 according to an embodiment of the present disclosure. In some embodiments, the method 300 includes: a block 302, configuring, to a user equipment (UE), a configuration of one or more downlink (DL) positioning reference signal (PRS) resource sets, wherein the configuration of one or more DL PRS resource sets can be transmitted by the base station upon a request of the UE, and each DL PRS resource set comprises one or more DL PRS resources, and a block 304, for each DL PRS resource set or each DL PRS resource, providing, to the UE, at least one of configuration parameters. This can solve issues in the prior art, reach a good balance between a resource overhead and a good positioning performance in a system deployment, provide a good communication performance, and/or provide high reliability.

In some embodiments, the at least one of configuration parameters comprises a DL PRS resource set identifier

6

(ID) that defines an identity of the PRS resource set configuration; a DL PRS resource transmission type that is used to indicate a time domain behavior of DL PRS resource transmission; parameters to indicate a DL PRS resource periodicity and a slot offset; a parameter to indicate a number of repetitions of one DL PRS resource; a parameter to indicate a time gap between two adjacent repetitions of a DL PRS resource; a parameter to indicate a number of slots for triggering offset; a parameter to indicate a number of periodicities that the DL PRS resource is transmitted when a base station activates a transmission of the DL PRS resource; a time domain resource allocation for the DL PRS resource within one slot; a frequency domain resource allocation for the DL PRS resource; or a quasi-colocation information configured to the DL PRS resource. In some embodiments, the DL PRS resource transmission type can indicate that the DL PRS resource is only transmitted upon a triggering or activation command sent by a system. In some embodiments, the DL PRS resource transmission type can indicate that the DL PRS resource is transmitted periodically. In some embodiments, the DL PRS resource transmission type can indicate that the DL PRS resource is transmitted by the base station upon a request from the UE.

In some embodiments, if a first DL PRS resource is transmitted only when the base station triggers the first DL PRS resource, the first DL PRS resource is repeated for the number of repetitions of the first DL PRS resource. In some embodiments, if a second DL PRS resource is transmitted periodically, the second DL PRS resource is repeated for the number of repetitions of the second DL PRS resource within each periodicity. In some embodiments, the parameter to indicate the time gap between two adjacent repetitions of the DL PRS resource can be in terms of one or more slots or one or more symbols. In some embodiments, the time domain resource allocation comprises a number of symbols allocated for the DL PRS resource, and an index of a starting symbol in one slot. In some embodiments, the frequency domain resource allocation comprises a starting physical resource block (PRB), a DL PRS resource bandwidth in terms of a number of PRBs allocated to the DL PRS resource, and/or a resource element (RE) offset of a first symbol within one DL PRS resource. In some embodiments, a DL PRS can be configured to be QCL-Type-D with the DL PRS or synchronization signal/physical broadcast channel (SS/PBCH) block from a serving cell or a non-serving cell, and/or the DL PRS can be configured to be QCL-Type-C with the SS/PBCH block from the serving cell or the non-serving cell. In some embodiments, if the DL PRS is configured as both QCL-Type-C and QCL-Type-D with the SS/PBCH block, an SSB index indicated is same.

In some embodiments, the UE can be indicated with a parameter to indicate a time domain transmission type for a DL PRS resource. In some embodiments, the UE can be indicated with that the DL PRS resource is an on-demand type. In some embodiments, if the DL PRS resource is configured with the on-demand type, the DL PRS resource is transmitted only when a system sends a trigger command or an activation command. In some embodiments, if the DL PRS resource is configured with the on-demand type, the DL PRS resource is transmitted only when the UE sends a request to a system. In some embodiments, the UE can be indicated with a parameter to indicate a time domain transmission behavior for a DL PRS resource. In some embodiments, if the DL PRS resource can be configured with the time domain transmission behavior set to be aperiodic, the UE can receive a downlink control information (DCI) command where a codepoint of a DCI can trigger one or more DL PRS resource sets. In some embodiments, the UE can be provided with one or more DL PRS triggering states through a higher layer parameter configuration, one DL PRS triggering state is associated with one or more DL PRS resource sets.

In some embodiments, for each DL PRS triggering state, the UE can be configured with one or more of following configuration parameters for DL PRS resource in each DL PRS resource set associated with the DL PRS triggering state: a transmission/reception point (TRP) ID; a quasi co-locate (QCL) configuration for each DL PRS resource; a number of repetitions of one DL PRS resource; a time gap between two repetitions of a DL PRS resource; a time length that the DL PRS resource is transmitted; or a triggering slot offset. In some embodiments, if the DL PRS resource can be configured with the time domain transmission behavior set to be semi-persistent, the UE can receive a media access control control element (MAC CE) command to activate a transmission of one or more DL PRS resource sets and the UE can also receive a MAC CE command to deactivate the transmission of one or more DL PRS resource sets. In some embodiments, in the MAC CE command, the UE can be indicated with one or more DL PRS resource sets and the UE can be indicated with one of more of following information: a TRP ID; a QCL configuration for each DL PRS resource; a number of repetitions of one DL PRS resource; a time gap between two repetitions of a DL PRS resource; or a time length that the DL PRS resource is transmitted.

In some embodiments, when the UE receives a DL PRS activation command and when the UE transmits a physical uplink control channel (PUCCH) with a hybrid automatic repeat request-acknowledge (HARQ-ACK) information in a slot n corresponding to a physical downlink shared channel (PDSCH) carrying the DL PRS activation command being transmitted in the slot n, the UE can assume that corresponding DL PRS resources indicated in the MAC CE command are transmitted from a first slot that is after the slot n. In some embodiments, if the time length that DL PRS resource is transmitted is indicated or configured, an activated DL PRS resource is transmitted until a configured or indicated time length is finished. In some embodiments, the UE can send a message to request a system to transmit one or more DL PRS resources with a particular configuration. In some embodiments, the UE can send one or more of following parameters for a requested DL PRS resource transmission: a TRP ID that is used to identify one TRP that the UE requests to transmit the DL PRS resource; a frequency domain resource allocation for the DL PRS resource; a size of a time domain resource allocation for one DL PRS resource; a transmission periodicity in terms of a slot for a DL PRS resource transmission; a number of repetitions of one DL PRS resource; a number of periodicities that DLPRS resource is transmitted; a time length of the DL PRS resource being transmitted; or a QCL information that the UE requests for a transmission of one DL PRS resource.

In some embodiments, the UE can request a TRP to use one SSB or DL PRS resource as a QCL source for the transmission of one DL PRS resource; the UE can indicate a type of QCL that is requested by the UE; the UE can request the TRP to transmit one PRS resource with a SSB or a DL PRS resource as a source for QCL-typeD for transmission; or the UE can request the TRP to transmit one PRS resource with a SSB or a DL PRS resource as a source for QCL-TypeC for transmission. In some embodiments, the UE can be configured with one or more DL PRS resource set configurations through higher layer parameters, and to request the transmission of the DL PRS resource, the UE can send a request command with one or more of the following information to the system: a TRP ID; a PRS resource set ID that provides an identity of one DL PRS resource set; a list of PRS resource IDs that can determine the DL PRS resource in a indicated DLPRS resource set; a number of repetitions of one DL PRS resource; a number of periodicities of one DL PRS resource; or a time length of a DL PRS resource transmission that the UE requests. In some embodiments, the UE can be configured with one or more DL PRS resource set configurations through higher layer parameters, and to request the transmission of the DL PRS resource, the UE can send a request command to the system and the request command can indicate one or more DL PRS resource triggering states. In some embodiments, when the UE sends the message to request the system to transmit one or more DL PRS resources with the particular configuration, the UE receives from a base station, a triggering DCI or an activation MAC CE command to trigger or activate the transmission of one or more DL PRS resource set or the DL PRS resource set can be sent upon a request from the UE.

In some embodiments, a UE can be provided with configurations of one or more downlink PRS (positioning reference signal) resource sets. Each DL PRS resource set consists of $K \geq 1$ DL PRS resource(s). For a DL PRS resource set or a DL PRS resource, the UE can be provided with the following configuration parameters: 1. A DL PRS resource set Id that defines the identity of the DL PRS resource set configuration. 2. A DL PRS resource transmission type that is used to indicate the time domain behavior of DL PRS resource transmission. In one example, this parameter can indicate that the DL PRS resource is only transmitted upon a triggering or activation command sent by the system. In one example, this parameter can indicate that the DL PRS resource is transmitted periodically. In one example, this parameter can indicate that the DL PRS resource is transmitted upon a request from the UE. 3. Parameters to indicate the DL PRS resource periodicity and slot offset. 4. A parameter to indicate the number of repetitions of one DL PRS resource. In one example, if a first DL PRS resource is transmitted only when the gNB trigger it, then the first DL PRS resource will be repeated for this number. In one example, if a second DL PRS resource is transmitted periodically, the second DL PRS resource will be repeated for this number within each periodicity. 5. A parameter to indicate the time gap between two adjacent repetition of a DL PRS resource. It can be in terms of slot(s). It can be in terms of symbols. 6. A parameter to indicate the number of slots for triggering offset. 7. A parameter to indicate the number of periodicities that the DL PRS resource can be transmitted when the gNB activates the transmission of the DL PRS resource. 8. Time domain resource allocation for a DL PRS resource within one slot: it can include the number of symbols allocated for the DL PRS resource, and the index of starting symbol in one slot. 9. Frequency domain resource allocation for a DL PRS resource: it can include the starting PRB, DL PRS resource bandwidth in terms of numbers of PRB allocated to the DL PRS resource, the RE offset of the first symbol within one DL PRS resource. 10. Quasi-colocation information configured to the DL PRS resource. The DL PRS may be configured to be 'QCL-Type-D' with a DL PRS or SS/PBCH Block from a serving cell or a non-serving cell. The DL PRS may be configured to be 'QCL-Type-C' with a SS/PBCH Block from a serving or non-serving cell. If the DL PRS is configured as both 'QCL-Type-C' and 'QCL-Type-D' with a SS/PBCH Block then the SSB index indicated should be the same.

In one exemplary method, a UE can be indicated with a parameter to indicate the time domain transmission type for a DL PRS resource. The UE can be indicated with that a DL PRS resource is a 'on-demand' type. If a DL PRS resource is configured with this type, the DL PRS resource is transmitted only when the system sends a trigger command (for example a DCI signaling) or a activation command (for example a MAC CE command). If a DL PRS resource is configured with this type, the DL PRS resource is transmitted only when the UE sends a request to the system.

In one exemplary method, a UE can be indicated with a parameter to indicate the time domain transmission behavior for a DL PRS resource: 1. A DL PRS resource can be configured with time domain transmission behavior set to be 'aperiodic'. For DL PRS resource configured to be 'aperiodic', the UE can receive a DCI command where a codepoint of the DCI can trigger one or more DL PRS resource set(s). 2. A DL PRS resource can be configured with time domain transmission behavior set to be 'semi-persistent'. For DL PRS resource configured to be 'semi-persistent', the UE can receive a MAC CE command to activate the transmission of one or more DL PRS resource set(s) and the UE can also receive a MAC CE command to deactivate the transmission of one or more DL PRS resource set(s).

In a first exemplary method, a UE can receive a DCI command where a codepoint of the DCI to trigger the transmission of one or more DL PRS resource sets. The UE can be provided with one or more DL PRS triggering states through higher layer parameter configuration. One DL PRS triggering state is associated with one or more DL PRS resource sets. For each DL PRS triggering state, the UE can also be configured with one or more of the following configuration parameters for DL PRS resource in each DL PRS resource set associated with the DL PRS triggering state: 1. TRP ID. 2. QCL configuration for each DL PRS resource. 3. Number of repetitions of one DL PRS resource. 4. Time gap between two repetitions of DL PRS resource. 5. The time length that the DL PRS resource can be transmitted, for example in terms of number of slots. 6. Triggering slot offset.

If the UE receives the DCI triggering DL PRS in slot n, the UE transmits every DL PRS resource in each of the triggered DL PRS resource set(s) in slot $\left\lfloor n \cdot \frac{2^{\mu_{PRS}}}{2^{\mu_{PDCCH}}} \right\rfloor + k + \left\lfloor \left( \frac{N^{CA}_{slot,offset,PDCCH}}{2^{\mu_{offset,PDCCH}}} - \frac{N^{CA}_{slot,offset,PRS}}{2^{\mu_{offset,PRS}}} \right) \cdot 2^{\mu_{PRS}} \right\rfloor$, where k is configured via higher layer parameter for each DL PRS resource in each triggered DL PRS resources set and is based on the subcarrier spacing of the triggered DL PRS transmission, $\mu_{PRS}$ and $\mu_{PDCCH}$ are the subcarrier spacing configurations for triggered DL PRS and PDCCH carrying the triggering command respectively; $N^{CA}_{slot,\,offset}$ and the $\mu_{offset}$ for the {scheduling, scheduled} carrier pair.

In a second exemplary method, a UE can receive a MAC CE command that can activate the transmission of one or more DL PRS resource sets. In the MAC CE command, the UE can be indicated with one or more DL PRS resource set. The UE can also be indicated with one of more of the following information: 1. TRP ID. 2. QCL configuration for each DL PRS resource. 3. Number of repetitions of one DL PRS resource. 4. Time gap between two repetitions of DL PRS resource. 5. The time length that the DL PRS resource can be transmitted, for example in terms of number of slots, for example the number of periodicities that the DL PRS resource will be transmitted.

When a UE receives an DL PRS activation command, and when the UE would transmit a PUCCH with HARQ-ACK information in slot n corresponding to the PDSCH carrying the activation command is transmitted in slot n, the UE can assume that corresponding DL PRS resources indicated in the MAC CE command will be transmitted from the first slot that is after slot $n + 3N^{subframe,\mu}_{slot}$, where μ is the SCS configuration for the PUCCH. If the time length that DL PRS resource can be transmitted is indicated or configured, the activated DL PRS resource will be transmitted until the configured/indicated time length is finished.

In some embodiments, a UE can request the system to transmit DL PRS resource(s) with particular configuration. The UE can send a message (for example a UCI in PUCCH, a MAC CE message) to request the system to transmit one or more DL PRS resources. The UE can send one or more of the following parameters for the requested DL PRS resource transmission: 1. A TRP Id that is used to identify one TRP that the UE requests to transmit the DL PRS resource. For example, if the UE indicates TRP Id for a first TRP, then the UE requests the first TRP to transmit DL PRS resource. 2. Frequency domain resource allocation for the DL PRS resource, for example the bandwidth allocated to the DL PRS resource in terms of number of resource blocks. The UE can request different DL PRS resource bandwidth based on his requirement on positioning performance. For example, if the performance for positioning requires high accuracy, the UE can request larger bandwidth. 3. The size of time domain resource allocation for one DL PRS resource. It can include the number of symbols allocated to one PRS resource within one slot. 4. The transmission periodicity in terms of slot for the DL PRS resource transmission. The UE can request different transmission periodicity based on his requirement on positioning performance. For example, if the performance for positioning requires low latency, the UE can request shorter periodicity. 5. Number of repetitions of one DL PRS resource that is used to indicate how many times one DL PRS resource is repeated. 6. Number of periodicities that DLPRS resource can be transmitted. For example, a UE can request the TRP to transmit one DL PRS resource for 4 periodicities. 7. How long time the DL PRS resource can be transmitted. It can indicate the time length the UE expect the gNB to transmit the DL PRS resource. This information is useful for the UE to request enough time span of DL PRS resource transmission. 8. A QCL information the UE request for the transmission of one DL PRS resource. For example, the UE can request the TRP to use one SSB or DL PRS resource as the QCL source for the transmission of one DL PRS resource. The UE can also indicate the type of QCL that is requested by the UE. The UE can request the TRP to transmit one PRS resource with a SSB or DL PRS resource as the source for QCL-typeD for the transmission. The UE can request the TRP to transmit one PRS resource with a SSB or DL PRS resource as the source for QCL-TypeC for the transmission.

In a first exemplary method, a UE can be configured with one or more DL PRS resource set configuration(s) through higher layer parameters. Each DL PRS resource set consists of K≥1 DL PRS resource(s). To request the transmission of DL PRS resource, the UE can send a request command with one or more of the following information to the system: 1. A TRP Id, for example, through a higher layer parameter *dl-PRS-ID*, to indicate one TRP that the UE requests to transmit DL PRS resource. 2. A PRS resource set Id that provides an identity of one DL PRS resource set. 3. A list of PRS resource Id(s) that can determine DL PRS resource in the indicated DLPRS resource set.

In a second exemplary method, a UE can be configured with one or more DL PRS resource set configurations through higher layer parameters. Each DL PRS resource set comprises K≥1 DL PRS resource(s). To request the transmission of DL PRS resource, the UE can send a request command with one or more of the following information to the system: 1. A TRP ID, for example, through a higher layer parameter *dl-PRS-ID*, to indicate one TRP that the UE requests to transmit DL PRS resource. 2. A PRS resource set Id that provides an identity of one DL PRS resource set. 3. A list of PRS resource Id(s) that can determine DL PRS resource in the indicated DLPRS resource set. 4. The number of repetitions of one DL PRS resource, that indicates how many times a DL PRS resource can be repeated. 5. The number of periodicities of DL PRS resource, that indicate how many periodicities a DL PRS resource can be transmitted. 6. The time length of DL PRS resource transmission that the UE requests.

In a third exemplary method, a UE can be configured with one or more DL PRS resource set configuration(s) through higher layer parameters. Each DL PRS resource set consists of K≥1 DL PRS resource(s). The UE can also be configured with one or more DL PRS resource triggering states. Each DL PRS resource triggering state can be associated with one or more DL PRS resource set(s) and the configuration information (for example QCL configuration for each DL PRS resource) for the associated DL PRS resource set. To request the transmission of DL PRS resource, the UE can send a request command with one or more of the following information to the system and the request command can indicate one or more DL PRS resource triggering state(s).

When receiving the request from the UE, some embodiments provide different methods: Exemplary Method 1: the gNB can send a triggering DCI or an activation MAC CE command to trigger or activate the transmission of one or more DL PRS resource set. Exemplary Method 2: The DL PRS resource set can be sent upon the request from the UE. For example, the UE can send a request command at slot n to the system to request the transmission of one DL PRS resource set, then the UE can expect the transmission of requested DL PRS resource at slot n+N. In one exemplary method, the UE can send the message requesting transmission of DL PRS resource through a PUCCH channel. In one exemplary method, the UE can send the message requesting transmission of DL PRS resource through a MAC CE message.

In summary, in some embodiments of this disclosure, some exemplary methods for downlink positioning reference signal transmission are presented in this disclosure: 1. The UE can be provided with a set of downlink PRS configurations that can be transmitted upon the request of the UE. 2. The UE can request the transmission of some particular PRS configuration. The UE can indicate one or more of the following requests: DL PRS transmission from a particular TRP. Requirement on the bandwidth of DL PRS, comb size and number of symbols in the DL PRS. Requirement on the TCI state of DL PRS transmission, i.e., QCL-TypeD. Requirement on the transmission periodicity. Requirement of number of transmission instances of one DL PRS resource. 3. The gNB can use DCI to trigger the transmission of DL PRS from a serving cell or non-serving cell. 4.The gNB can use MAC CE to activate or deactivate the transmission of DL PRS from a serving cell or non-serving cell. 5. The transmission of DL PRS resource can be triggered by the request of the UE. The UE sends one message (for example through PUCCH or MAC CE) to request the transmission of DL PRS resource and then the requested DL PRS resource is transmitted based on configured or preconfigured timing.

The following 3GPP standards are relevant to some embodiments of this disclosure: 3GPP TS 38.211 V16.0.0: "NR; Physical channels and modulation", 3GPP TS 38.212 V16.0.0: "NR; Multiplexing and channel coding", 3GPP TS 38.213 V16.0.0: "NR; Physical layer procedures for control", 3GPP TS 38.214 V16.0.0: "NR; Physical layer procedures for data", 3GPP TS 38.215 V16.0.0: "NR; Physical layer measurements", 3GPP TS 38.321 V16.0.0: "NR; Medium Access Control (MAC) protocol specification", 3GPP TS 38.331 V16.0.0: "NR; Radio Resource Control (RRC) protocol specification".

The following table includes some abbreviations, which may be used in some embodiments of the present disclosure:

| 3GPP | 3rd Generation Partnership Project |
|---|---|
| 5G | 5th Generation |
| NR | New Radio |
| LTE | Long term evolution |
| gNB | Next generation NodeB |
| DL | Downlink |
| UL | Uplink |
| CSI | Channel state information |
| CSI-RS | Channel state information reference signal |
| CORESET | Control Resource Set |
| DCI | Downlink control information |
| TRP | Transmission/reception point |
| RRC | Radio Resource Control |
| RB | Resource Block |

(continued)

| PRB | Physical Resource Block |
| --- | --- |
| RBG | Resource Block Group |
| LCS | Location services |
| DL-TDOA | Downlink Time difference of arrival |
| NW | Network |
| RSTD | Reference signal time difference |
| DL PRS | Downlink Positioning reference signal |
| QCL | Quasi co-locate |
| SS/PBCH | Synchronization Signal/Physical Broadcast Channel |

Commercial interests for some embodiments are as follows. 1. Solving issues in the prior art. 2. Reaching a good balance between a resource overhead and a good positioning performance in a system deployment. 3. Providing a good communication performance. 4. Providing high reliability. 5. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. The deployment scenarios include, but not limited to, indoor hotspot, dense urban, urban micro, urban macro, rural, factor hall, and indoor D2D scenarios. Some embodiments of the present disclosure are a combination of "techniques/processes" that can be adopted in 3GPP specification to create an end product. Some embodiments of the present disclosure could be adopted in 5G NR licensed and non-licensed or shared spectrum communications. Some embodiments of the present disclosure propose technical mechanisms. The present example embodiment is applicable to NR in unlicensed spectrum (NR-U). The present disclosure can be applied to other mobile networks, in particular to mobile network of any further generation cellular network technology (6G, etc.).

FIG. 5 is a block diagram of an example system 700 for wireless communication according to an embodiment of the present disclosure. Embodiments described herein may be implemented into the system using any suitably configured hardware and/or software. FIG. 5 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

**Claims**

1. A wireless communication method (200) by a user equipment, UE, comprising:

being configured (202), by a base station, with a configuration of one or more downlink, DL, positioning reference signal, PRS, resource sets, wherein the configuration of one or more DL PRS resource sets is transmitted by the base station upon a request of the UE, and each DL PRS resource set comprises one or more DL PRS resources; and
for each DL PRS resource set or each DL PRS resource, being provided (204) with at least one of configuration parameters,
wherein the UE is adapted to request the at least one of configuration parameters:

a parameter to indicate a time gap between two adjacent repetitions of a DL PRS resource; or
a parameter to indicate a number of slots for triggering offset.

2. The method of claim 1, wherein the UE is adapted to further request the at least one of configuration parameters:

a DL PRS resource set identifier, ID, that defines an identity of the PRS resource set configuration;
a DL PRS resource transmission type that is used to indicate a time domain behavior of DL PRS resource transmission;
parameters to indicate a DL PRS resource periodicity and a slot offset;
a parameter to indicate a number of repetitions of one DL PRS resource;
a parameter to indicate a number of periodicities that the DL PRS resource is transmitted when a base station activates a transmission of the DL PRS resource;
a time domain resource allocation for the DL PRS resource within one slot;
a frequency domain resource allocation for the DL PRS resource; or
a quasi-colocation information configured to the DL PRS resource.

3. The method of claim 2, wherein the DL PRS resource transmission type indicates that the DL PRS resource is transmitted by the base station upon a request from the UE.

4. The method of claim 1, wherein the parameter to indicate the time gap between two adjacent repetitions of the DL PRS resource is in terms of one or more slots or one or more symbols.

5. The method of claim 2, wherein the time domain resource allocation comprises a number of symbols allocated for the DL PRS resource, and an index of a starting symbol in one slot.

6. The method of claim 2, wherein the frequency domain resource allocation comprises a starting physical resource block, PRB, a DL PRS resource bandwidth in terms of a number of PRBs allocated to the DL PRS resource, and/or a resource element, RE, offset of a first symbol within one DL PRS resource.

7. The method of claim 2, wherein a DL PRS is configured to be QCL-Type-D with the DL PRS or synchronization signal/physical broadcast channel, SS/PBCH, block from a serving cell or a non-serving cell, and/or the DL PRS is configured to be QCL-Type-C with the SS/PBCH block from the serving cell or the non-serving cell.

8. A user equipment, UE, comprising modules adapted to perform the method according to any one of claims 1 to 7.

9. A base station, comprising modules adapted to perform:

configuring, to a user equipment, UE, a configuration of one or more downlink, DL, positioning reference signal, PRS, resource sets, wherein the configuration of one or more DL PRS resource sets is transmitted by the base station upon a request of the UE, and each DL PRS resource set comprises one or more DL PRS resources; and
for each DL PRS resource set or each DL PRS resource, providing, to the UE, at least one of configuration parameters,
wherein the base station is adapted to receive from the UE a request for the at least one of configuration parameters:

a parameter to indicate a time gap between two adjacent repetitions of a DL PRS resource; or

a parameter to indicate a number of slots for triggering offset.

10. The base station of claim 9, wherein the base station is adapted to receive from the UE a further request for the at least one of configuration parameters:

a DL PRS resource set identifier, ID, that defines an identity of the PRS resource set configuration;
a DL PRS resource transmission type that is used to indicate a time domain behavior of DL PRS resource transmission;
parameters to indicate a DL PRS resource periodicity and a slot offset;
a parameter to indicate a number of repetitions of one DL PRS resource;
a parameter to indicate a number of periodicities that the DL PRS resource is transmitted when a base station activates a transmission of the DL PRS resource;
a time domain resource allocation for the DL PRS resource within one slot;
a frequency domain resource allocation for the DL PRS resource; or
a quasi-colocation information configured to the DL PRS resource.

11. The base station of claim 9, wherein the parameter to indicate the time gap between two adjacent repetitions of the DL PRS resource is in terms of one or more slots or one or more symbols.

12. The base station of claim 9, wherein the base station is adapted to receive from the UE a further request to transmit one or more DL PRS resources with a particular configuration.

13. The base station of claim 12, wherein the base station is adapted to receive from the UE a further request for one or more of following parameters for a requested DL PRS resource transmission:

a TRP ID that is used to identify one TRP that the UE requests to transmit the DL PRS resource;
a frequency domain resource allocation for the DL PRS resource;
a size of a time domain resource allocation for one DL PRS resource;
a transmission periodicity in terms of a slot for a DL PRS resource transmission;
a number of repetitions of one DL PRS resource;
a number of periodicities that DLPRS resource is transmitted;
a time length of the DL PRS resource being transmitted; or
a QCL information that the UE requests for a transmission of one DL PRS resource.

14. The base station of claim 13, wherein the base station is adapted to receive from the UE a further request for a TRP to use one SSB or DL PRS resource as a QCL source for the transmission of one DL PRS resource; a type of QCL; a TRP to transmit one PRS resource with a SSB or a DL PRS resource as a source for QCL-typeD for transmission; or a TRP to transmit one PRS resource with a SSB or a DL PRS resource as a source for QCL-TypeC for transmission.

15. The base station of claim 12, wherein the base station is adapted to configure the UE with one or more DL PRS resource set configurations through higher layer parameters, and the base station is adapted to receive from the UE to request the transmission of the DL PRS resource a further request command with one or more of the following information:

a TRP ID;
a PRS resource set ID that provides an identity of one DL PRS resource set;
a list of PRS resource IDs that determines the DL PRS resource in a indicated DLPRS resource set;
a number of repetitions of one DL PRS resource;
a number of periodicities of one DL PRS resource; or
a time length of a DL PRS resource transmission that the UE requests.

**Patentansprüche**

1. Drahtloskommunikationsverfahren (200), durchgeführt von einem Benutzergerät, UE, umfassend:

ausgelegt Werden (202), durch eine Basisstation, mit einer Auslegung eines oder mehrerer Downlink-, DL-, "Positioning Reference Signal"-, PRS-, Ressourcensätze, wobei die Auslegung eines oder mehrerer DL-PRS-Ressourcensätze von der Basisstation auf eine Anforderung des UE hin übertragen wird und jeder DL-PRS-Ressourcensatz eine oder mehrere DL-PRS-Ressourcen umfasst; und

für jeden DL-PRS-Ressourcensatz oder jede DL-PRS-Ressource, bereitgestellt Werden (204) mindestens eines von Auslegungsparametern, wobei das UE dazu eingerichtet ist, den mindestens einen von Auslegungsparametern anzufordern:

einen Parameter zur Angabe eines zeitlichen Abstands zwischen zwei benachbarten Wiederholungen einer DL-PRS-Ressource; oder einen Parameter zur Angabe einer Anzahl von Schlitzen für das Auslösen von Versatz.

2. Verfahren nach Anspruch 1, wobei das UE dazu eingerichtet ist, weiterhin den mindestens einen von Auslegungsparametern anzufordern:

eine DL-PRS-Ressourcensatz-Kennung, -ID, die eine Identität der PRS-Ressourcensatzauslegung definiert; eine DL-PRS-Ressourcenübertragungsart, die zur Angabe eines Zeitdomänenverhaltens von DL-PRS-Ressourcenübertragung verwendet wird; Parameter zur Angabe einer DL-PRS-Ressourcenperiodizität und eines Schlitzversatzes;
einen Parameter zur Angabe einer Anzahl von Wiederholungen einer DL-PRS-Ressource;
einen Parameter zur Angabe einer Anzahl von Periodizitäten, mit denen die DL-PRS-Ressource übertragen wird, wenn eine Basisstation eine Übertragung der DL-PRS-Ressource aktiviert;
eine Zeitdomänenressourcenzuweisung für die DL-PRS-Ressource innerhalb eines Schlitzes;
eine Frequenzdomänenressourcenzuweisung für die DL-PRS-Ressource; oder
eine Quasi-Colocation-Information, die für die DL-PRS-Ressource ausgelegt ist.

3. Verfahren nach Anspruch 2, wobei die DL-PRS-Ressourcenübertragungsart angibt, dass die DL-PRS-Ressource von der Basisstation auf eine Anforderung des UE hin übertragen wird.

4. Verfahren nach Anspruch 1, wobei der Parameter, der den zeitlichen Abstand zwischen zwei benachbarten Wiederholungen der DL-PRS-Ressource angibt, in Form von einem oder mehreren Schlitzen oder einem oder mehreren Symbolen vorliegt.

5. Verfahren nach Anspruch 2, wobei die Zeitdomänenressourcenzuweisung eine Anzahl von Symbolen, die für die DL-PRS-Ressource zugewiesen sind, und einen Index eines Startsymbols in einem Schlitz umfasst.

6. Verfahren nach Anspruch 2, wobei die Frequenzdomänenressourcenzuweisung einen Start-"Physical Resource Block", -PRB, eine DL-PRS-Ressourcenbandbreite in Form einer Anzahl von PRBs, die der DL-PRS-Ressource zugewiesen sind, und/oder einen "Resource Element"-, RE-, Versatz eines ersten Symbols innerhalb einer DL-PRS-Ressource umfasst.

7. Verfahren nach Anspruch 2, wobei ein DL-PRS so ausgelegt ist, dass er QCL-Typ-D mit dem DL-PRS- oder Synchronisationssignal/"Physical Broadcast Channel"-, SS/PBCH-, Block von einer bedienenden Zelle oder einer nicht-bedienenden Zelle ist, und/oder der DL-PRS so ausgelegt ist, dass er QCL-Typ-C mit dem SS/PBCH-Block von der bedienenden Zelle oder der nicht-bedienenden Zelle ist.

8. Benutzergerät, UE, umfassend Module, die dazu eingerichtet sind, das Verfahren nach einem der Ansprüche 1 bis 7 durchzuführen.

9. Basisstation, umfassend Module, die dazu eingerichtet sind, folgende Vorgänge durchzuführen:

Auslegen eines Benutzergeräts, UE, mit einer Auslegung eines oder mehrerer Downlink-, DL-, "Positioning Reference Signal"-, PRS-, Ressourcensätze, wobei die Auslegung eines oder mehrerer DL-PRS-Ressourcensätze von der Basisstation auf eine Anforderung des UE hin übertragen wird und jeder DL-PRS-Ressourcensatz eine oder mehrere DL-PRS-Ressourcen umfasst; und
für jeden DL-PRS-Ressourcensatz oder jede DL-PRS-Ressource, Bereitstellen, für das UE, mindestens eines von Auslegungsparametern, wobei die Basisstation dazu eingerichtet ist, vom UE eine Anforderung für den mindestens einen von Auslegungsparametern zu empfangen:
einen Parameter zur Angabe eines zeitlichen Abstands zwischen zwei benachbarten Wiederholungen einer DL-PRS-Ressource; oder einen Parameter zur Angabe einer Anzahl von Schlitzen für das Auslösen von Versatz.

10. Basisstation nach Anspruch 9, wobei die Basisstation dazu eingerichtet ist, vom UE eine weitere Anforderung für den mindestens einen von Auslegungsparametern zu empfangen:

eine DL-PRS-Ressourcensatz-Kennung, -ID, die eine Identität der PRS-Ressourcensatzauslegung definiert;
eine DL-PRS-Ressourcenübertragungsart, die zur Angabe eines Zeitdomänenverhaltens von DL-PRS-Ressourcenübertragung verwendet wird; Parameter zur Angabe einer DL-PRS-Ressourcenperiodizität und eines Schlitzversatzes;
einen Parameter zur Angabe einer Anzahl von Wiederholungen einer DL-PRS-Ressource;
einen Parameter zur Angabe einer Anzahl von Periodizitäten, mit denen die DL-PRS-Ressource übertragen wird, wenn eine Basisstation eine Übertragung der DL-PRS-Ressource aktiviert;
eine Zeitdomänenressourcenzuweisung für die DL-PRS-Ressource innerhalb eines Schlitzes;
eine Frequenzdomänenressourcenzuweisung für die DL-PRS-Ressource; oder
eine Quasi-Colocation-Information, die für die DL-PRS-Ressource ausgelegt ist.

11. Basisstation nach Anspruch 9, wobei der Parameter, der den zeitlichen Abstand zwischen zwei benachbarten Wiederholungen der DL-PRS-Ressource angibt, in Form von einem oder mehreren Schlitzen oder einem oder mehreren Symbolen vorliegt.

12. Basisstation nach Anspruch 9, wobei die Basisstation dazu eingerichtet ist, vom UE eine weitere Anforderung zum Übertragen einer oder mehrerer DL-PRS-Ressourcen mit einer spezifischen Auslegung zu empfangen.

13. Basisstation nach Anspruch 12, wobei die Basisstation dazu eingerichtet ist, vom UE eine weitere Anforderung für einen oder mehrere von folgenden Parametern für eine angeforderte DL-PRS-Ressourcenübertragung zu empfangen:

eine TRP-ID, die zur Identifizierung eines TRP verwendet wird, den das UE zur Übertragung der DL-PRS-Ressource auffordert;
eine Frequenzdomänenressourcenzuweisung für die DL-PRS-Ressource;
eine Größe einer Zeitdomänenressourcenzuweisung für eine DL-PRS-Ressource;
eine Übertragungsperiodizität in Form eines Schlitzes für eine DL-PRS-Ressourcenübertragung;
eine Anzahl von Wiederholungen einer DL-PRS-Ressource;
eine Anzahl von Periodizitäten, in denen die DL-PRS-Ressource übertragen wird;
eine zeitliche Länge der übertragenen DL-PRS-Ressource; oder
eine QCL-Information, die das UE für eine Übertragung einer DL-PRS-Ressource anfordert.

14. Basisstation nach Anspruch 13, wobei die Basisstation dazu eingerichtet ist, von der UE eine weitere Anforderung zu empfangen, dass ein TRP eine SSB- oder eine DL-PRS-Ressource als QCL-Quelle für die Übertragung einer DL-PRS-Ressource zu verwenden; eine Art von QCL; einen TRP zur Übertragung einer PRS-Ressource mit einer SSB- oder einer DL-PRS-Ressource als Quelle für QCL-Typ-D zur Übertragung; oder ein TRP zur Übertragung einer PRS-Ressource mit einer SSB oder einer DL-PRS-Ressource als Quelle für QCL-Typ-C zur Übertragung.

15. Basisstation nach Anspruch 12, wobei die Basisstation dazu eingerichtet ist, das UE mit einer oder mehreren DL-PRS-Ressourcensatzauslegungen durch Parameter der höheren Schicht auszulegen, und die Basisstation dazu eingerichtet ist, vom UE zur Anforderung der Übertragung der DL-PRS-Ressource einen weiteren Anforderungsbefehl mit einer oder mehreren der folgenden Informationen zu empfangen:

eine TRP-ID;
eine PRS-Ressourcensatz-ID, die eine Identität eines DL-PRS-Ressourcensatzes bereitstellt;
eine Liste von PRS-Ressourcen-IDs, die die DL-PRS-Ressource in einem angegebenen DL-PRS-Ressourcensatz bestimmt;
eine Anzahl von Wiederholungen einer DL-PRS-Ressource;
eine Anzahl von Periodizitäten einer DL-PRS-Ressource; oder
eine zeitliche Länge für eine DL-PRS-Ressourcenübertragung, die das UE anfordert.

## Revendications

1. Procédé de communication sans fil (200) par un équipement d'utilisateur (UE), comprenant les étapes consistant à :

être configuré (202), par une station de base, avec une configuration d'un ou plusieurs ensembles de ressources de signal de référence de positionnement (PRS) en liaison descendante (DL), la configuration d'un ou plusieurs ensembles de ressources PRS DL étant émise par la station de base sur demande de l'UE, et chaque ensemble de ressources PRS DL comprenant une ou plusieurs ressources PRS DL ; et

pour chaque ensemble de ressources PRS DL ou chaque ressource PRS DL, être fourni (204) avec au moins un de paramètres de configuration, l'UE étant conçu pour demander l'au moins un de paramètres de configuration :

un paramètre indiquant un intervalle de temps entre deux répétitions adjacentes d'une ressource PRS DL ; ou

un paramètre indiquant un nombre de créneaux pour le déclenchement d'un décalage.

2. Procédé selon la revendication 1, dans lequel l'UE est conçu pour demander en outre l'au moins un de paramètres de configuration :

un identifiant (ID) d'ensemble de ressources PRS DL qui définit une identité de la configuration d'ensemble de ressources PRS ;
un type d'émission de ressource PRS DL qui est utilisé pour indiquer un comportement dans le domaine temporel de l'émission de ressource PRS DL ;
des paramètres indiquant une périodicité de ressource PRS DL et un décalage de créneau ;
un paramètre indiquant un nombre de répétitions d'une ressource PRS DL ;
un paramètre indiquant un nombre de périodicités d'émission de la ressource PRS DL lorsqu'une station de base active une émission de la ressource PRS DL ;
une allocation de ressource dans le domaine temporel pour la ressource PRS DL dans un créneau ;
une allocation de ressource dans le domaine fréquentiel pour la ressource PRS DL ; ou
des informations de quasi-colocalisation configurées pour la ressource PRS DL.

3. Procédé selon la revendication 2, dans lequel le type d'émission de ressource PRS DL indique que la ressource PRS DL est émise par la station de base sur demande de l'UE.

4. Procédé selon la revendication 1, dans lequel le paramètre indiquant l'intervalle de temps entre deux répétitions adjacentes de la ressource PRS DL est exprimé en termes d'un ou plusieurs créneaux ou d'un ou plusieurs symboles.

5. Procédé selon la revendication 2, dans lequel l'allocation de ressource dans le domaine temporel comprend un nombre de symboles alloués à la ressource PRS DL et un indice d'un symbole de départ dans un créneau.

6. Procédé selon la revendication 2, dans lequel l'allocation de ressource dans le domaine fréquentiel comprend un bloc de ressources physiques (PRB) de départ, une bande passante de ressource PRS DL en termes de nombre de PRB alloués à la ressource PRS DL, et/ou un décalage d'élément de ressource (RE) d'un premier symbole dans une ressource PRS DL.

7. Procédé selon la revendication 2, dans lequel un PRS DL est configuré pour être QCL-Type-D avec le PRS DL ou un bloc de signaux de synchronisation/canaux physiques de diffusion (SS/PBCH) en provenance d'une cellule de desserte ou d'une cellule hors desserte, et/ou le PRS DL est configuré pour être QCL-Type-C avec le bloc SS/PBCH en provenance de la cellule de desserte ou de la cellule hors desserte.

8. Équipement d'utilisateur (UE) comprenant des modules conçus pour réaliser le procédé selon l'une quelconque des revendications 1 à 7.

9. Station de base, comprenant des modules conçus pour réaliser les étapes consistant à :

configurer, pour un équipement d'utilisateur (UE), une configuration d'un ou plusieurs ensembles de ressources de signal de référence de positionnement (PRS) en liaison descendante (DL), la configuration d'un ou plusieurs ensembles de ressources PRS DL étant émise par la station de base sur demande de l'UE, et chaque ensemble de ressources PRS DL comprenant une ou plusieurs ressources PRS DL ; et
pour chaque ensemble de ressources PRS DL ou chaque ressource PRS DL, fournir, à l'UE, au moins un de paramètres de configuration, l'UE étant conçu pour recevoir en provenance de l'UE une demande concernant l'au moins un de paramètres de configuration :

un paramètre indiquant un intervalle de temps entre deux répétitions adjacentes d'une ressource PRS DL ; ou

un paramètre indiquant un nombre de créneaux pour le déclenchement d'un décalage.

**10.** Station de base selon la revendication 9, la station de base étant conçue pour recevoir en provenance de l'UE une autre demande concernant l'au moins un de paramètres de configuration :

un identifiant (ID) d'ensemble de ressources PRS DL qui définit une identité de la configuration d'ensemble de ressources PRS ;
un type d'émission de ressource PRS DL qui est utilisé pour indiquer un comportement dans le domaine temporel de l'émission de ressource PRS DL ;
des paramètres indiquant une périodicité de ressource PRS DL et un décalage de créneau ;
un paramètre indiquant un nombre de répétitions d'une ressource PRS DL ;
un paramètre indiquant un nombre de périodicités d'émission de la ressource PRS DL lorsqu'une station de base active une émission de la ressource PRS DL ;
une allocation de ressource dans le domaine temporel pour la ressource PRS DL dans un créneau ;
une allocation de ressource dans le domaine fréquentiel pour la ressource PRS DL ; ou
des informations de quasi-colocalisation configurées pour la ressource PRS DL.

**11.** Station de base selon la revendication 9, dans laquelle le paramètre indiquant l'intervalle de temps entre deux répétitions adjacentes de la ressource PRS DL est exprimé en termes d'un ou plusieurs créneaux ou d'un ou plusieurs symboles.

**12.** Station de base selon la revendication 9, la station de base étant conçue pour recevoir en provenance de l'UE une autre demande d'émission d'une ou plusieurs ressources PRS DL avec une configuration particulière.

**13.** Station de base selon la revendication 12, la station de base étant conçue pour recevoir en provenance de l'UE une autre demande concernant un ou plusieurs des paramètres suivants pour une émission de ressource PRS DL demandée :

un ID de TRP qui est utilisé pour identifier un TRP auquel l'UE demande d'émettre la ressource PRS DL ;
une allocation de ressource dans le domaine fréquentiel pour la ressource PRS DL ;
une taille d'une allocation de ressource dans le domaine fréquentiel pour une ressource PRS DL ;
une périodicité d'émission en termes de créneau pour une émission de ressource PRS DL ;
un nombre de répétitions d'une ressource PRS DL ;
un nombre de périodicités d'émission d'une ressource PRS DL ;
une durée de la ressource PRS DL en cours d'émission ; ou
des informations QCL que l'UE demande pour l'émission d'une ressource PRS DL.

**14.** Station de base selon la revendication 13, la station de base étant conçue pour recevoir en provenance de l'UE une autre demande concernant un TRP pour utiliser un SSB ou une ressource PRS DL en tant que source QCL pour l'émission d'une ressource PRS DL ; un type de QCL ; un TRP pour émettre une ressource PRS avec un SSB ou une ressource PRS DL en tant que source de QCL-Type-D pour l'émission ; ou un TRP pour émettre une ressource PRS avec un SSB ou une ressource PRS DL en tant que source de QCL-Type-C pour l'émission.

**15.** Station de base selon la revendication 12, la station de base étant conçue pour configurer l'UE avec une ou plusieurs configurations d'ensembles de ressources PRS DL par le biais de paramètres de couche supérieure, et la station de base étant conçue pour recevoir en provenance de l'UE, afin de demander l'émission de la ressource PRS DL, une autre commande de demande avec une ou plusieurs des informations suivantes :

un ID de TRP ;
un ID d'ensemble de ressources PRS qui fournit une identité d'un ensemble de ressources PRS DL ;
une liste d'ID de ressources PRS qui détermine la ressource PRS DL dans un ensemble de ressources PRS DL indiqué ;
un nombre de répétitions d'une ressource PRS DL ;
un nombre de périodicités d'une ressource PRS DL ; ou
une durée d'une émission de ressource PRS DL demandée par l'UE.

TRP1         Coordination        TRP2

FIG. 1A

TRP1         Coordination        TRP2

FIG. 1B

30

| User Equipment 10 | Base Station 20 |

Processor 11 — Transceiver 13

Memory 12

Processor 21 — Transceiver 23

Memory 22

FIG. 2

200

202 Being configured, by a base station, with a configuration of one or more downlink (DL) positioning reference signal (PRS) resource sets, wherein the configuration of one or more DL PRS resource sets can be transmitted by the base station upon a request of the UE, and each DL PRS resource set comprises one or more DL PRS resources

204 For each DL PRS resource set or each DL PRS resource, being provided with at least one of configuration parameters

FIG. 3

300

302 Configuring, to a user equipment (UE), a configuration of one or more downlink (DL) positioning reference signal (PRS) resource sets, wherein the configuration of one or more DL PRS resource sets can be transmitted by the base station upon a request of the UE, and each DL PRS resource set comprises one or more DL PRS resources

304 For each DL PRS resource set or each DL PRS resource, providing, to the UE, at least one of configuration parameters

FIG. 4

700

| Display 750 | Camera 760 | Sensor 770 | I/O interface 780 |

Memory/storage 740

Application circuitry 730

Baseband circuitry 720

RF circuitry 710

FIG. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020028648 A1

**Non-patent literature cited in the description**

- NR; Physical channels and modulation. *3GPP TS 38.211 V16.0.0*
- NR; Multiplexing and channel coding. *3GPP TS 38.212 V16.0.0*
- NR; Physical layer procedures for control. *3GPP TS 38.213 V16.0.0*
- NR; Physical layer procedures for data. *3GPP TS 38.214 V16.0.0*
- NR; Physical layer measurements. *3GPP TS 38.215 V16.0.0*
- NR; Medium Access Control (MAC) protocol specification. *3GPP TS 38.321 V16.0.0*
- NR; Radio Resource Control (RRC) protocol specification. *3GPP TS 38.331 V16.0.0*